# EUROPÄISCHE PATENTSCHRIFT

(11) **EP 3 403 554 B1**
(45) Veröffentlichungstag und Bekanntmachung des Hinweises auf die Patenterteilung: **15.04.2020**
(21) Anmeldenummer: 18168212.1
(22) Anmeldetag: 19.04.2018
(51) Int. Cl.: A47J 47/12

(54) **BEHÄLTER MIT GEBREMSTER ABDECKKLAPPE**
CONTAINER WITH BRAKED COVER ELEMENT
RÉCIPIENT À COUVERCLE FREINÉ

(30) Priorität: 19.05.2017 DE 102017208519
(43) Veröffentlichungstag der Anmeldung: 21.11.2018
(73) Patentinhaber: WMF Group GmbH, 73312 Geislingen/Steige (DE)
(72) Erfinder: Abele, Werner, 89558 Böhmenkirch (DE)
(74) Vertreter: Pfenning, Meinig & Partner mbB

(56) Entgegenhaltungen:
- DE-A1-102005 045 777
- GB-A- 661 409
- GB-A- 2 381 290
- RU-C1- 2 481 783
- SU-A1- 1 822 741
- US-A- 2 736 452

## Beschreibung

Die vorliegende Erfindung betrifft einen Behälter mit einem Korpus und einer Abdeckklappe, wobei die Abdeckklappe so mit dem Korpus verbunden ist, dass beim Schließen der Abdeckklappe diese gebremst wird, hingegen beim Öffnen der Abdeckklappe diese nicht gebremst wird, so dass beim Öffnen ein Anheben des Behälters vermieden werden kann. Hierfür verantwortlich ist die im Behälter eingesetzte erfindungsgemäße Bremsvorrichtung.

Ein häufig auftretendes Problem bei Behältern mit Abdeckklappen ist, dass es beim Schließvorgang aufgrund eines fehlenden Schließwiderstands ein Abbremsen der Klappe nicht möglich ist, was mit ungewünschten Geräuschen beim Anschlag der Klappe am Korpus verbunden ist und auch zu Beschädigungen an Korpus oder Abdeckklappe führen kann
Erste Ansätze, um dieses Problem zu vermeiden sind bereits aus der DE 10 2005 045 777 A1 bekannt, die einen Kasten mit einer Mantelschale betrifft, wobei die Mantelschale zwei voneinander abgewandte, zueinander parallele Randkanten und zwei einander zugewandte, eine Zugriffsöffnung begrenzende Öffnungskanten aufweist. Die Mantelschale enthält weiterhin zwei sie stirnseitig verschließende Endplatten, die je eine Nut zur Aufnahme einer der Randkanten aufweisen, und mit einem Schwenkdeckel, der mit zwei in das Kasteninnere weisenden Seitenwangen an Lagerstellen der Endplatten zwischen einer die Zugriffsöffnung verschließenden Schließstellung und einer die Zugriffsöffnung freigebenden Offenstellung schwenkbar gelagert ist und in der Schließstellung und der Öffnungsstellung unter der Einwirkung der Schwerkraft gegen je einen Endanschlag anliegt. Mindestens eine Deckelbremse, wirkt sowohl in der Offenstellung als auch in der Schließstellung der Schwenkbewegung des Schwenkdeckels entgegen.

Die in DE 10 2005 045 777 A1 beschriebene Deckelbremse, die sowohl beim Öffnen als auch beim Schließen des Deckels bremst, weist den Nachteil auf, dass beim Öffnen des Deckels der Behälter, in leerem oder fast leerem Zustand, mit angehoben wird.

Davon ausgehend war es Aufgabe der vorliegenden Erfindung einen Behälter mit einem Deckel bereitzustellen, der eine Bremsvorrichtung aufweist, die beim Schließen des Deckels bremst, beim Öffnen hingegen keine bremsende Wirkung entfaltet.

Diese Aufgabe wird durch einen Behälter mit den Merkmalen des Anspruchs 1 gelöst. Die weiteren abhängigen Ansprüche zeigen vorteilhafte Weiterbildungen auf.

Erfindungsgemäß wird ein Behälter bereitgestellt, der folgende Bauteile aufweist:
I) einen Korpus mit zwei Seitenwänden,
II) eine Abdeckklappe mit zwei Seitenwangen, die über mindestens zwei Verbindungselemente mit den Seitenwänden des Korpus verbunden ist;
III) mindestens eine Bremsvorrichtung mit mindestens einem Bremsklotz und mindestens einem beweglich gelagerten Bremshebel, die an mindestens einer Seitenwange und/oder mindestens einer Seitenwand fixiert sind, wobei der mindestens eine Bremshebel nicht am selben Bauteil wie der mindestens eine Bremsklotz angeordnet ist,
dadurch gekennzeichnet, dass die Kraft mit welcher der Bremshebel an den Bremsklotz angepresst wird, beim Schließen der Abdeckklappe größer ist als beim Öffnen der Abdeckklappe und wobei diese Anpresskraft so gewählt ist, dass die Bremskraft beim Schließvorgang größer oder gleich der Schließkraft der Abdeckklappe ist.

Im Rahmen der Erfindung wird der Bremshebel zum Bremsklotz so positioniert, dass beim Schließen der Abdeckplatte die vom Bremshebel auf den Bremsklotz ausgebübte Anpresskraft ansteigt. Die aus der Anpresskraft resultierende Bremskraft entspricht dabei zumindest der Schließkraft der Abdeckplatte. So wird verhindert, dass die Abdeckklappe zuschlägt. Vielmehr kommt es zu einem sanften Abbremsen der Abdeckplatte, wodurch gemäß Stand der Technik auftretende Zufallgeräusche vermieden werden.

Im umgekehrten Fall - also beim Öffnen der Abdeckklappe - wird der Bremshebel zum Bremsklotz so positioniert, dass beim Öffnen die vom Bremshebel auf den Bremsklotz ausgeübte Anpresskraft so weit reduziert wird, dass die aus der Anpresskraft resultierende Bremskraft keinen wesentlichen Widerstand beim Öffnen der Abdeckklappe ausübt.

Die Bremskraft wirkt der Schließkraft der Abdeckklappe entgegen und muss beim Schließvorgang deshalb mindestens so groß wie diese Schließkraft sein. Die Anpresskraft, aus welcher die Bremskraft resultiert, wird von vielen Faktoren beeinflusst. Einen besonders wichtigen Einfluss üben dabei die Shore-Härte des Bremsklotzes sowie die Länge und Ausgestaltung des Bremshebels aus.

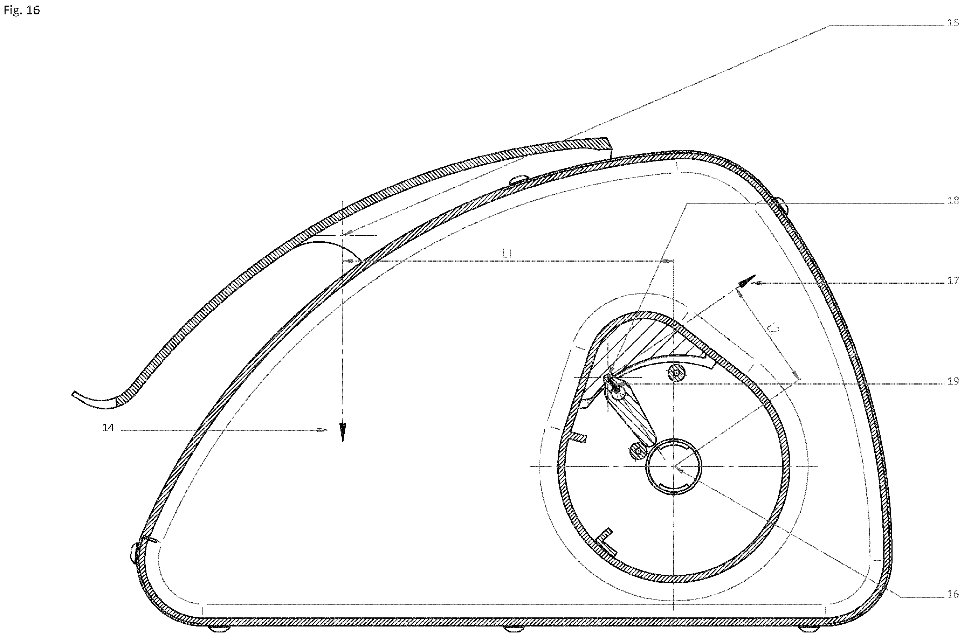

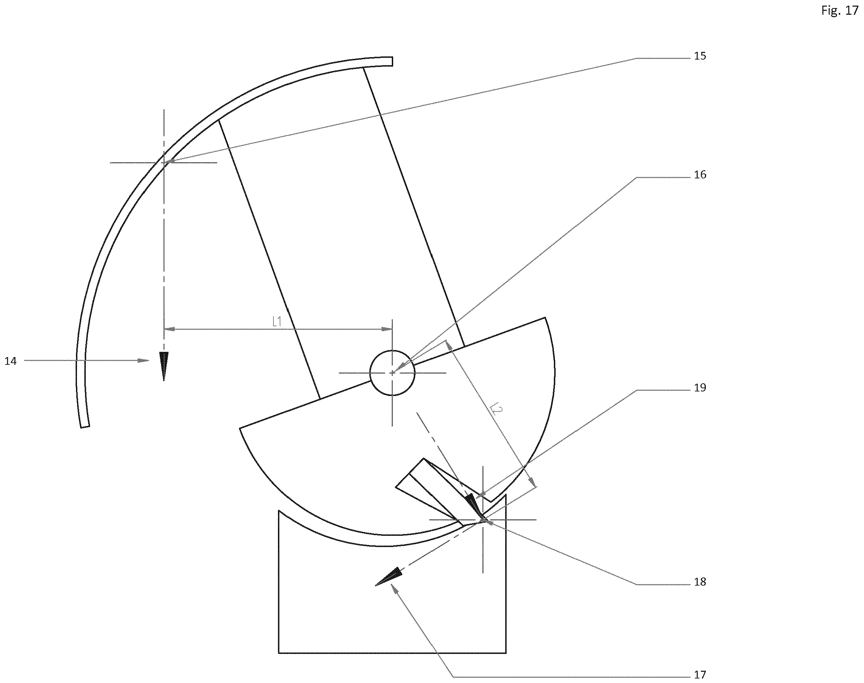

Unter der "Schließkraft" im Sinne der vorliegenden Erfindung wird das Produkt aus der Normalkraft der Abdeckklappe und dem Abstand zwischen dem Schwerpunkt der Abdeckklappe und dem Drehpunkt der Bremsvorrichtung verstanden (siehe auch Beschreibung der Figuren 16 und 17). Der Schwerpunkt der Abdeckklappe ist der Angriffspunkt der Normalkraft.

Die "Bremskraft" gemäß vorliegender Erfindung wirkt der "Schließkraft" der Abdeckklappe entgegen, "Bremskraft" und "Schließkraft" bilden also ein Kräftepaar. Sie ist das Produkt aus der Reibkraft und dem Abstand zwischen dem Angriffspunkt des Bremshebels am Bremsklotz und dem Drehpunkt der Bremsvorrichtung (siehe auch Beschreibung der Figuren 16 und 17).

Die Kraft mit welcher der Bremshebel an den Bremsklotz angepresst wird, kann bevorzugt durch die Geometrie der Fläche des Bremsklotzes, an die der Bremshebel in der Bewegung in den Bremsklotz eingreift, gesteuert werden. Die Bremskraft wird also bevorzugt durch geeignete Gestaltung der Geometrie der Fläche am Bremsklotz eingestellt.

Es ist bevorzugt, dass der Behälter mindestens zwei Anschläge für den Bremshebel aufweist, wobei diese am selben Bauteil wie der Bremshebel fixiert sind. Diese Anschläge dienen dazu, die Maximalpositionen des Bremshebels bei dessen Bewegung zu definieren. Die Anschläge können dabei in vertikaler Richtung versetzt zueinander angeordnet sein, wobei dann der obere und untere Anschlag bevorzugt eine Drehbewegung des Bremshebels definieren.

Gemäß einer anderen Ausführungsform bilden die Seitenwände einer Kulisse in welche der Bremshebel eingreift die Anschläge. Der Bremshebel ist dabei zwischen den Anschlägen frei beweglich ist, aber die Maximalauslenkung des Bremshebels beim Öffnen und Schließen der Abdeckklappe wird durch die Anschläge vorgeben.

Eine bevorzugte Ausführungsform sieht vor, dass die mindestens zwei Verbindungselemente zweiteilig aufgebaut sind mit jeweils zwei Verbindungsteilen, wobei sich die Verbindungsteile durch Öffnungen in der Seitenwange und Öffnungen in der Seitenwand hindurch erstrecken und die Verbindungsteile kraft- oder formschlüssig, insbesondere durch Steckverbindung, Schraubverbindung, Klebeverbindung, Pressverbindung, Rastverbindung oder Schweißverbindung, miteinander verbunden sind.

Es ist bevorzugt, dass mindestens eine Seitenwange mit einem Zapfen verbunden ist und der Bremshebel eine Aufnahme für den Zapfen aufweist, so dass der Bremshebel auf dem Zapfen drehbar gelagert ist.

Gemäß einer bevorzugten Ausführungsform ist der Zapfen kraft- oder formschlüssig mit mindestens einer Seitenwange verbunden, insbesondere durch eine Steckverbindung, Schraubverbindung, Klebeverbindung, Pressverbindung, Rastverbindung oder Schweißverbindung.

Es ist bevorzugt, dass der Behälter ein Bauteil, insbesondere eine Scheibe, mit dem Verbindungselement und dem Zapfen aufweist. Diese Scheibe kann bevorzugt einstückig mit dem Verbindungselement und dem Zapfen ausgestaltet sein. Ebenso ist es aber auch möglich, dass Scheibe, Verbindungselement und Zapfen als getrennte Bauteile ausgeführt sind, die kraft- oder formschlüssig miteinander als Einheit verbunden sind.

Eine weitere bevorzugte Ausführungsform sieht vor, dass mindestens eine Seitenwand eine die Bremsvorrichtung umhüllende Wand aufweist, über die der Bremsklotz an der Seitenwand fixiert ist.

Vorzugsweise weist der Bremsklotz eine Führungsschiene für den Bremshebel auf, wobei die Tiefe und/oder Breite der Führungsschiene vom vorderen Ende des Bremsklotzes zum hinteren Ende des Bremsklotzes hin zunimmt.

Es ist bevorzugt, dass der Bremshebel ein in den Bremsklotz, insbesondere in die Führungsschiene eingreifendes Element aufweist, wobei die Geometrie des eingreifenden Elements und die Geometrie der Führungsschiene aufeinander abgestimmt sind und wobei besonders bevorzugt das eingreifende Element buckelförmig oder zahnförmig ausgebildet ist.

Weiter ist es bevorzugt, dass die Breite der Führungsschiene am vorderen Ende des Bremsklotzes um bis zu 1 mm, bevorzugt um bis zu 0,3 mm geringer ist als am hinteren Ende. Weiterhin ist es bevorzugt, dass die Tiefe der Führungsschiene am vorderen Ende des Bremsklotzes um bis zu 10 mm, bevorzugt um bis zu 5 mm und besonders bevorzugt um bis zu 2 mm geringer ist als am hinteren Ende.

Grundsätzlich können für den Bremsklotz verschiedenste Materialien eingesetzt werden. Vorzugsweise besteht der Bremsklotz zumindest teilweise, bevorzugt vollständig aus einem dauerelastischen Material. Hierzu zählen insbesondere Silikon, thermoplastische Elastomere, Gummi und Mischungen hiervon. Die weiteren Bauteile des Behälters bestehen vorzugsweise unabhängig voneinander aus einem Kunststoff. Hierbei ist es bevorzugt, dass die genannten Bauteile aus demselben Kunststoff bestehen.

Der Behälter gemäß vorliegender Erfindung weist die folgenden Bauteil auf:
I) einen Korpus mit zwei Seitenwänden,
II) eine Abdeckklappe mit zwei Seitenwangen, die über mindestens zwei Verbindungselemente mit den Seitenwänden des Korpus verbunden ist;
III) mindestens eine Bremsvorrichtung mit mindestens einem Bremsklotz und mindestens einem beweglich gelagerten Bremshebel, die an mindestens einer Seitenwange und/oder mindestens einer Seitenwand fixiert sind, wobei der mindestens eine Bremshebel nicht am selben Bauteil wie der mindestens eine Bremsklotz angeordnet ist.

Erfindungsgemäß ist die Kraft mit welcher der Bremshebel an den Bremsklotz angepresst wird, beim Schließen der Abdeckklappe größer als beim Öffnen der Abdeckklappe und wobei diese Anpresskraft so gewählt ist, dass die Bremskraft beim Schließvorgang größer oder gleich der Schließkraft der Abdeckklappe ist. Diese funktionale Beschreibung der Wirkungsweise der Bremsvorrichtung läßt sich über verschiedene Anordnungen und Ausgestaltungen der Bauteile erreichen, einige dieser Anordnungen und Ausgestaltungen werden in den bevorzugten Ausführungsformen und abhängigen Ansprüchen angegeben.

Ein bevorzugter erfindungsgemäßer Behälter weist beispielsweise
I) einen Korpus mit zwei Seitenwänden,
II) eine Abdeckklappe mit zwei Seitenwangen, die über mindestens zwei Verbindungselemente mit den Seitenwänden des Korpus verbunden ist; und
III) mindestens eine Bremsvorrichtung mit mindestens einem Bremsklotz und mindestens einem beweglich gelagerten Bremshebel, die an mindestens einer Seitenwange und/oder mindestens einer Seitenwand fixiert sind, wobei der mindestens eine Bremshebel nicht am selben Bauteil wie der mindestens eine Bremsklotz angeordnet ist,
auf, wobei es besonders bevorzugt ist, dass der Behälter mindestens zwei Anschläge für den Bremshebel aufweist, wobei diese am selben Bauteil wie der Bremshebel fixiert sind.

Gemäß einer anderen Ausführungsform bilden die Seitenwände einer Kulisse in welche der Bremshebel eingreift die Anschläge. Der Bremshebel ist dabei zwischen den Anschlägen frei beweglich, aber die Maximalauslenkung des Bremshebels beim Öffnen und Schließen der Abdeckklappe wird durch die Anschläge vorgeben.

Eine bevorzugte Ausführungsform sieht vor, dass die mindestens zwei Verbindungselemente zweiteilig aufgebaut sind mit jeweils zwei Verbindungsteilen, wobei sich die Verbindungsteile durch Öffnungen in der Seitenwange und Öffnungen in der Seitenwand hindurch erstrecken und die Verbindungsteile kraft- oder formschlüssig, insbesondere durch Steckverbindung, Schraubverbindung, Klebeverbindung, Pressverbindung, Rastverbindung oder Schweißverbindung, miteinander verbunden sind.

Es ist bevorzugt, dass mindestens eine Seitenwange mit einem Zapfen verbunden ist und der Bremshebel eine Aufnahme für den Zapfen aufweist, so dass der Bremshebel auf dem Zapfen drehbar gelagert ist.

Gemäß einer bevorzugten Ausführungsform ist der Zapfen kraft- oder formschlüssig mit mindestens einer Seitenwange verbunden, insbesondere durch eine Steckverbindung, Schraubverbindung, Klebeverbindung, Pressverbindung, Rastverbindung oder Schweißverbindung.

Es ist bevorzugt, dass der Behälter ein Bauteil, insbesondere eine Scheibe, mit dem Verbindungselement und dem Zapfen aufweist. Diese Scheibe kann bevorzugt einstückig mit dem Verbindungselement und dem Zapfen ausgestaltet sein. Ebenso ist es aber auch möglich, dass Scheibe, Verbindungselement und Zapfen als getrennte Bauteile ausgeführt sind, die kraft- oder formschlüssig miteinander als Einheit verbunden sind.

Eine weitere bevorzugte Ausführungsform sieht vor, dass mindestens eine Seitenwand eine die Bremsvorrichtung umhüllende Wand aufweist, über die der Bremsklotz an der Seitenwand fixiert ist.

Vorzugsweise weist der Bremsklotz eine Führungsschiene für den Bremshebel auf, wobei die Tiefe und/oder Breite der Führungsschiene vom vorderen Ende des Bremsklotzes zum hinteren Ende des Bremsklotzes hin zunimmt.

Es ist bevorzugt, dass das eingreifende Element des Bremshebels in die Führungsschiene des Bremsklotzes eingreift, wobei bevorzugt die Geometrie des eingreifenden Elements und die Geometrie der Führungsschiene aufeinander abgestimmt sind und wobei besonders bevorzugt das eingreifende Element buckelförmig oder zahnförmig ausgebildet ist.

Weiter ist es bevorzugt, dass die Breite der Führungsschiene am vorderen Ende des Bremsklotzes um bis zu 1 mm, bevorzugt um bis zu 0,3 mm geringer ist als am hinteren Ende. Weiterhin ist es bevorzugt, dass die Tiefe der Führungsschiene am vorderen Ende des Bremsklotzes um bis zu 10 mm, bevorzugt um bis zu 5 mm und besonders bevorzugt um bis zu 2 mm geringer ist als am hinteren Ende.

Grundsätzlich können für den Bremsklotz verschiedenste Materialien eingesetzt werden. Vorzugsweise besteht der Bremsklotz zumindest teilweise, bevorzugt vollständig aus einem dauerelastischen Material. Hierzu zählen insbesondere Silikon, thermoplastische Elastomere, Gummi und Mischungen hiervon. Die weiteren Bauteile des Behälters bestehen vorzugsweise unabhängig voneinander aus einem Kunststoff. Hierbei ist es bevorzugt, dass die genannten Bauteile aus demselben Kunststoff bestehen.

Die Abdeckplatte besteht vorzugsweise aus einem Material ausgewählt aus der Gruppe bestehend aus Edelstahl, Glas, Holz, Bambus, Kunststoff, insbesondere Plexiglas, und Mischungen hiervon. Der Behälter ist vorzugsweise ausgewählt aus der Gruppe bestehend aus
- einem Behälter zur Aufbewahrung von Lebensmitteln, insbesondere Brot,
- einem Warmhaltebehälter (üblicherweise mit dem englischen Begriff Chafing-Dish bezeichnet),
- einer Werkzeugkiste,
- einer Spielzeugkiste,
- einem Aquarium,
- einem Schuhregal und
- einer Wäschebox.

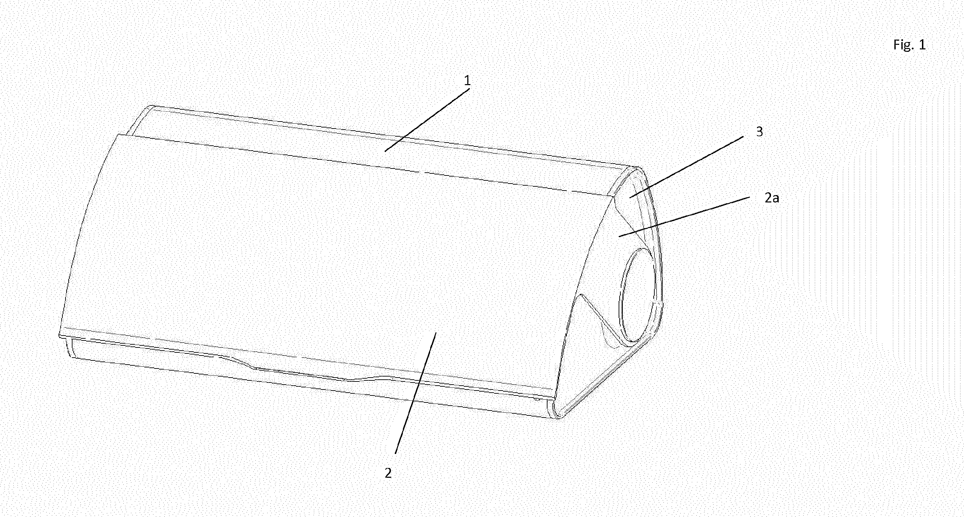

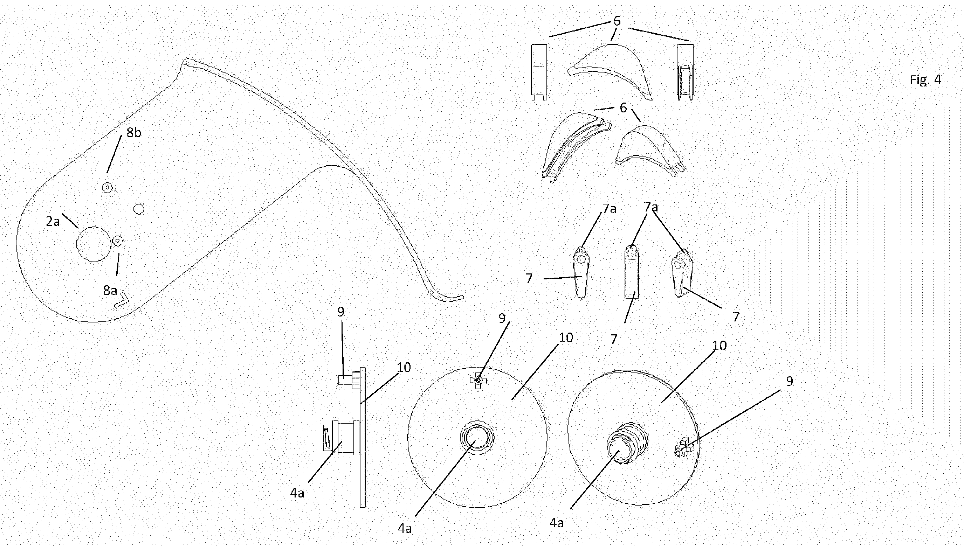

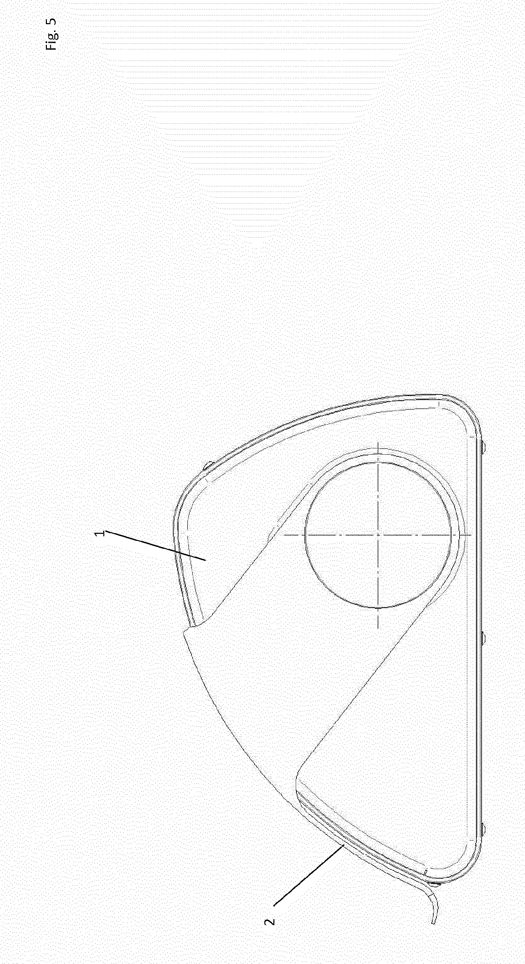

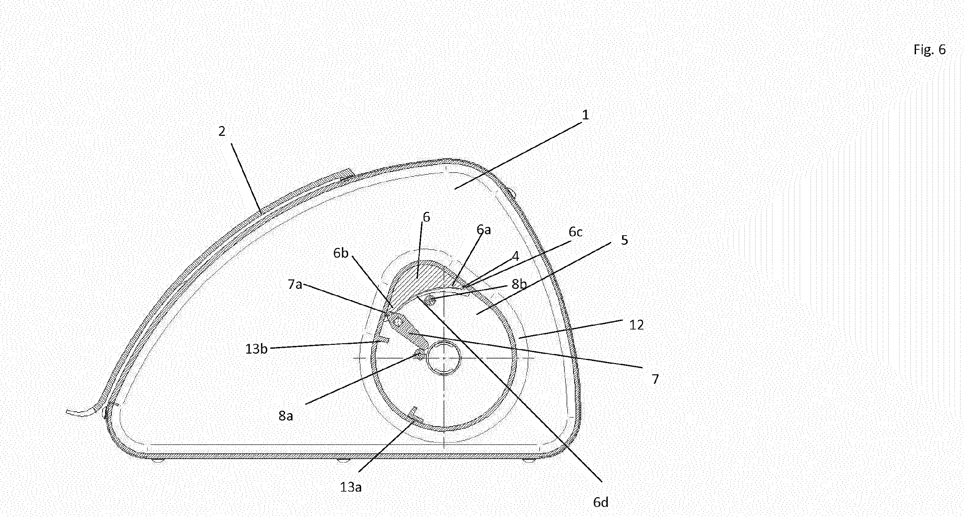

Die nachfolgenden Figuren 1 bis 11 sollen die vorliegende Erfindung an Hand einer Brotbox, als Beispiel für den erfindungsgemäßen Behälter, illustrieren, sind aber in keiner Weise als einschränkend zu werten.
Figur 1 zeigt die Brotbox in geschlossenem Zustand in der Draufsicht.

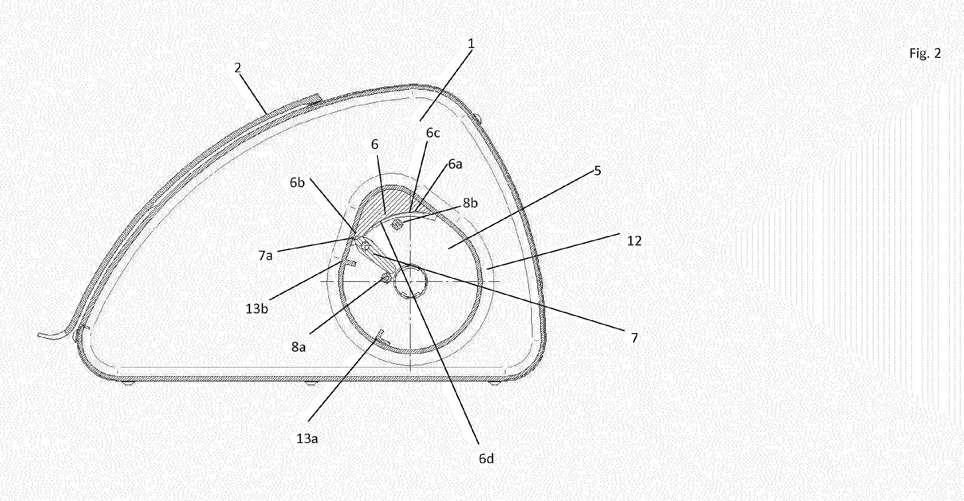

Figur 2 zeigt einen Querschnitt der Brotbox (1) in geschlossenem Zustand, mit einer Abdeckklappe (2). Die Bremsvorrichtung (5) wird von der Wand (12) umhüllt. An der umhüllenden Wand (12) ist der Bremsklotz (6) fixiert. Am vorderen Ende des Bremsklotzes (6b) liegt der Bremshebel (7) an und greift mit einem eingreifenden Element (7a) in dessen keilförmige Führungsschiene (6a) ein. Der Bremshebel (7) ist auf einem Zapfen (9) drehbar gelagert und liegt in geschlossenem Zustand an einem unteren Anschlag (8a) an. Weiterhin weist die in Figur 2 gezeigte Bremsvorrichtung (5) eine Arretiervorrichtung (13) auf, die einen an der Wand (12) fixierten Anschlag (13b) und einen ebenfalls an der Wand befestigten, aber beweglichen Vorsprung (13a) enthält.

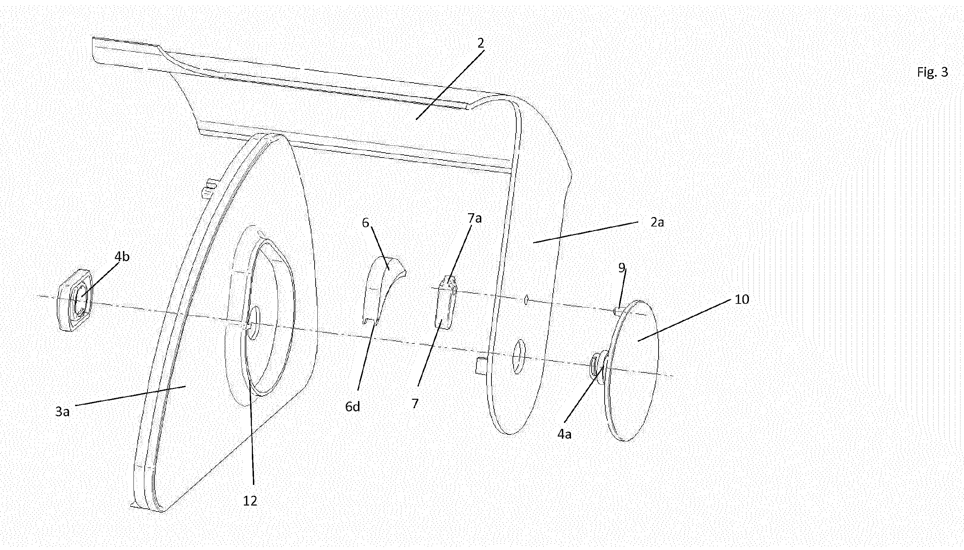

Figur 3 ist zu entnehmen auf welche Weise die Bremsvorrichtung (5) mit der Seitenwange (2a) der Abdeckklappe (2) verbunden ist und gibt weiterhin Aufschluss über die Fixierung des Bremshebels (7) auf dem Zapfen (9). Das Verbindungselement (4) enthält ein erstes auf einer Scheibe (10) angeordnetes verbindendes Bauteil (4a) und ein zweites Bauteil (4b). Weiterhin ist der Zapfen (9) auf der Scheibe angeordnet und ragt durch eine erste Öffnung in der Seitenwange (2a) in das innere des Behälters (1) und nimmt dort den Bremshebel (7) auf, so dass dieser drehbar bleibt. Das erste verbindende Bauteil (4a) und das zweite verbindende Bauteil (4b) werden durch eine zweite Öffnung in der Seitenwange (2a) zusammengeführt, so dass eine Verbindung zwischen der Bremsvorrichtung (3) und dem Abdeckklappe (2) hergestellt wird. Der Bremshebel gemäß Figur 3 kann beispielsweise folgende Maße aufweisen: Länge: 30,4 mm, Breite 8,4 mm, Durchmesser der Aussparung für den Zapfen (9): 5 mm, Breite des eingreifenden Elements: 5,6 mm. Der Bremsklotz (6) gemäß dieser Abbildung weist beispielhaft folgende Abmessungen auf. Länge: 52,3 mm, Breite: 25,3 mm, Tiefe der Führungsschiene am vorderen Ende: 0,7 mm, Tiefe der Führungsschiene am hinteren Ende: 2,9 mm, Breite der Führungsschiene am vorderen Ende: 5,3 mm, Breite der Führungsschiene am hinteren Ende: 5,3 mm.
Figur 4 zeigt die Seitenwange (2a) der Abdeckklappe (2) mit zwei Öffnungen und den beiden Anschlägen (8a) und (8b). Weiterhin werden der Bremsklotz (6), der Bremshebel (7) sowie die Scheibe (10) mit dem darauf angeordnetem Bauteil (4a) und dem Zapfen (9) in verschiedenen Perspektiven abgebildet. Dabei sind auch die Seitenwangen (6d) des Bremsklotzes zu erkennen.
Figur 5 zeigt die Brotbox aus der Seitenansicht mit geschlossener Abdeckklappe.
Die Figuren 6 bis 11 zeigen jeweils einen Querschnitt der Brotbox aus der Seitenansicht und erläutern die Funktionsweise der erfindungsgemäßen Bremsvorrichtung (5).
   Aus dem Querschnitt gemäß Figur 6 lässt sich die Stellung des Bremshebels (7) der Brotbox in geschlossenem Zustand entnehmen. Der Bremshebel liegt am unteren Anschlag (8a) und am vorderen Ende des Bremsklotzes (6b) an. Das eingreifende Element des Bremshebels (7a) befindet sich dabei in maximalen Eingriff in der Führungsschiene (6a) des Bremsklotzes (6). In dieser Position entwickelt die Bremsvorrichtung (5) ihre maximale Bremskraft.

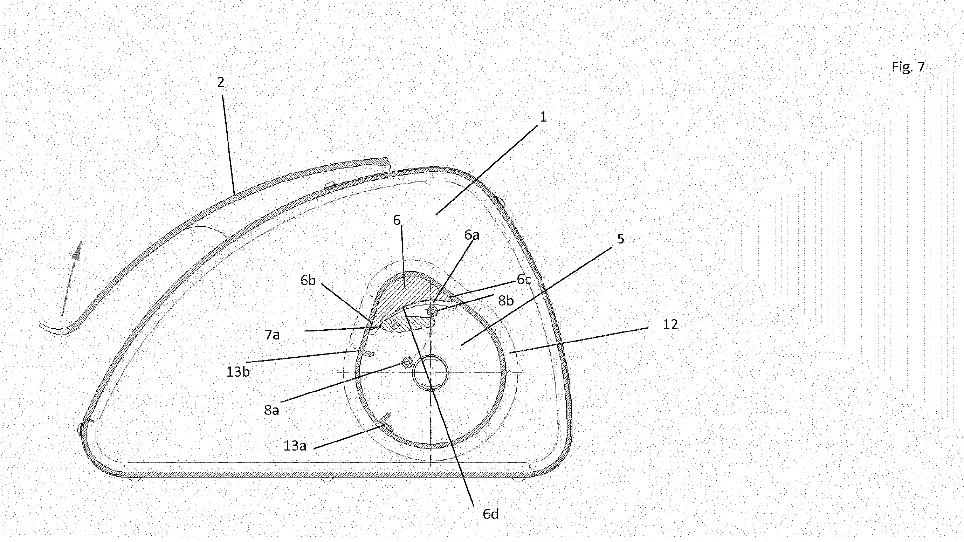

Figur 7 zeigt den Beginn der Öffnungsbewegung der Abdeckklappe (2). Dabei dreht sich der Bremshebel (7), bedingt durch die Reibungskraft zwischen dem Bremsklotz (6) und dem eingreifenden Element (7a) des Bremshebels, aus dem Bremsklotz (6) heraus. Ein weiteres Herausdrehen wird durch den oberen Anschlag (8b) verhindert, so dass der Bremshebel sich nun zwischen den Seitenwangen (6d) der Führungsschiene (6a) des Bremsklotzes (6) in leichter Reibung befindet. Damit wird gewährleistet, dass aus jeder Position während der Öffnungsbewegung die Abdeckklappe wieder geschlossen werden kann und der Bremshebel (7) dabei wieder unmittelbar in die Führungsschiene (6a) gedreht und somit eine bremsende Wirkung erreicht wird.

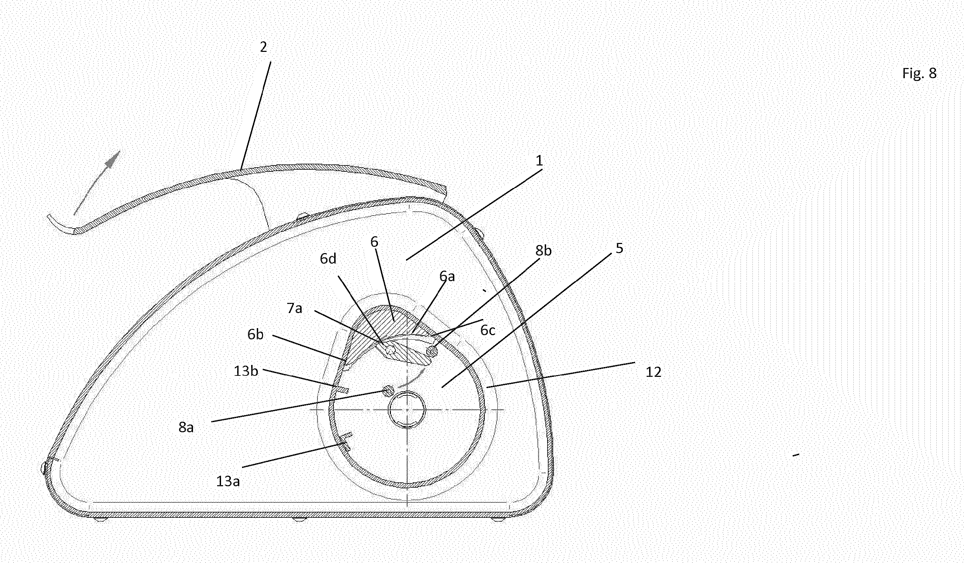

In Figur 8 ist die Öffnungsbewegung weiter fortgeschritten. Der Bremshebel (7) wird während der gesamten Öffnungsbewegung durch die Reibung zwischen den Seitenwangen (6d) der Führungsschiene (6a) des Bremsklotzes (6) in einer an den oberen Anschlag (8b) anliegender Position gehalten.

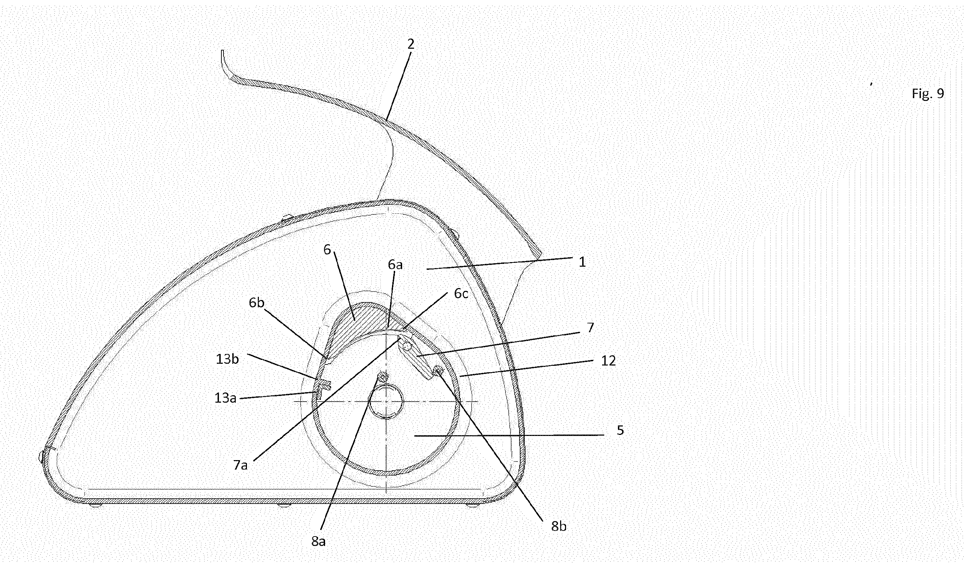

Figur 9 bildet die Stellung der einzelnen Elemente der Bremsvorrichtung (5) bei vollständig geöffneter Abdeckklappe (2) ab. Dabei schlägt der Vorsprung (13a) am Anschlag (13b) an.

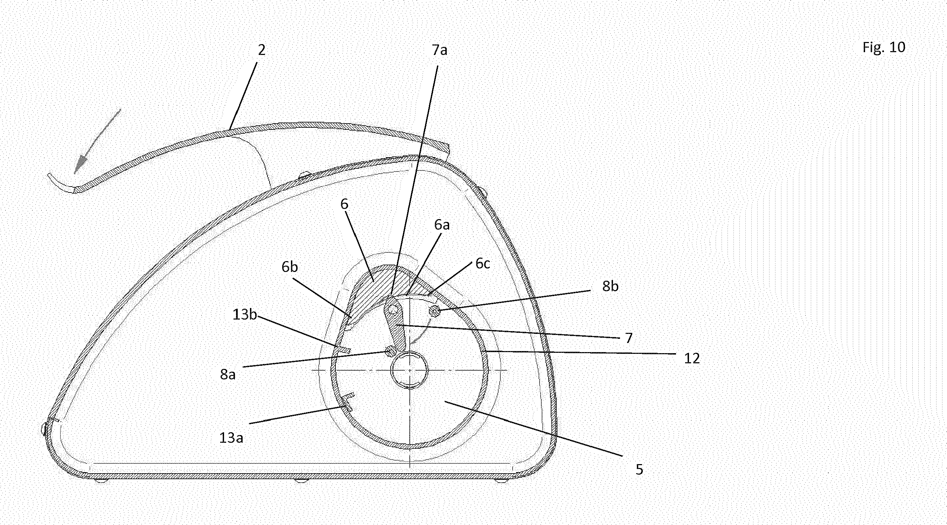

Figur 10 zeigt den Beginn der Schließbewegung der Abdeckklappe (2). Der Bremshebel (7), insbesondere das eingreifende Element (7a), wird dabei durch die Reibung zwischen dem Bremsklotz (6) und dem Bremshebel (7) hineingedreht und liegt am unteren Anschlag (8a) an.

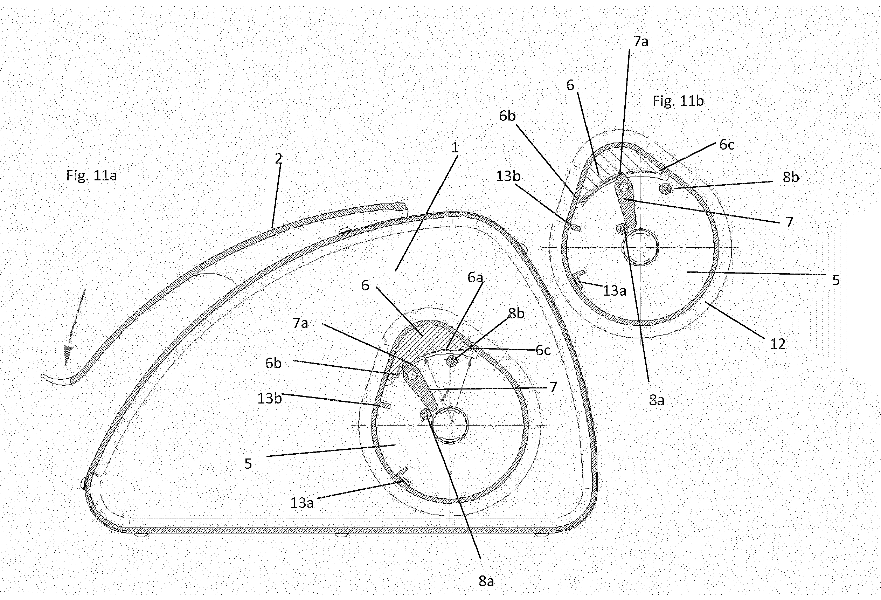

In Figur 11a ist die Schließbewegung weiter fortgeschritten. Der Bremshebel (7) wird durch die die Reibung zwischen Bremsklotz (6) und Bremshebel (7) in der hineingedrehten Position gehalten und liegt am unteren Anschlag (8a) an. Durch den zunehmenden Eingriff des eingreifenden Elements in die Führungsschiene (6a) des Bremsklotzes steigt die Bremskraft während des Schließvorgangs kontinuierlich.
Figur 11b zeigt eine Ausführungsform der Bremsvorrichtung gemäß welcher der Bremsklotz (6) eine ansteigende Kurve aufweist. Dadurch wird eine kontinuierliche Zunahme der Bremskraft beim Schließvorgang gewährleistet.

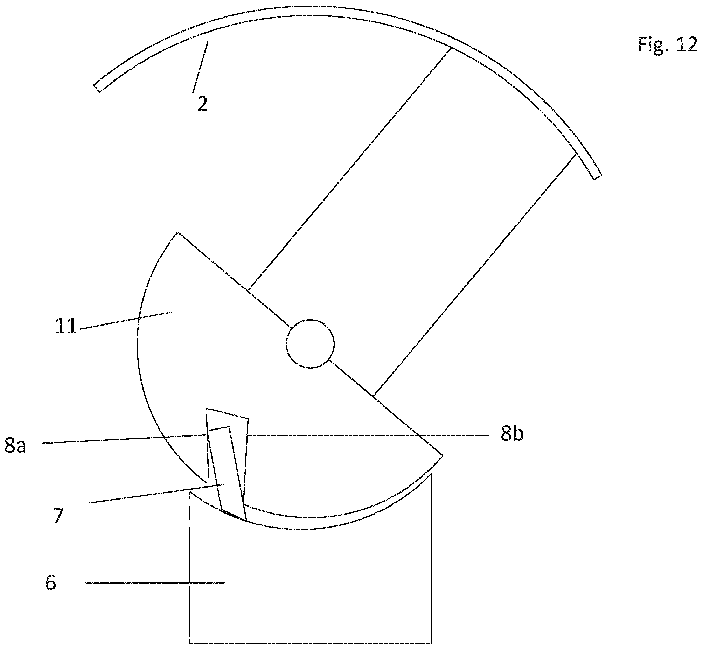

Die Figuren 12 bis 14 illustrieren das Prinzip für eine Bremsvorrichtung, in der der Bremshebel in eine Kulisse eingreift.
Figur 12 zeigt die Anordnung des Bremshebels (7) in einer Kulisse (11), dabei werden die Maximalpositionen des Bremshebels (7) durch die Seitenwände der Kulisse (8a) und (8b) festgelegt. Bei vollständig geöffneter Abdeckklappe (2) nehmen die Bauteile (6), (7) und (11) die in Figur 12 gezeigten Positionen ein. Zu beachten ist, dass der Bremshebel (7) an der linken Seitenwand (8a) der Kulisse (11) anliegt und der Bremshebel (7) kaum in den Bremsklotz (6) eingreift.

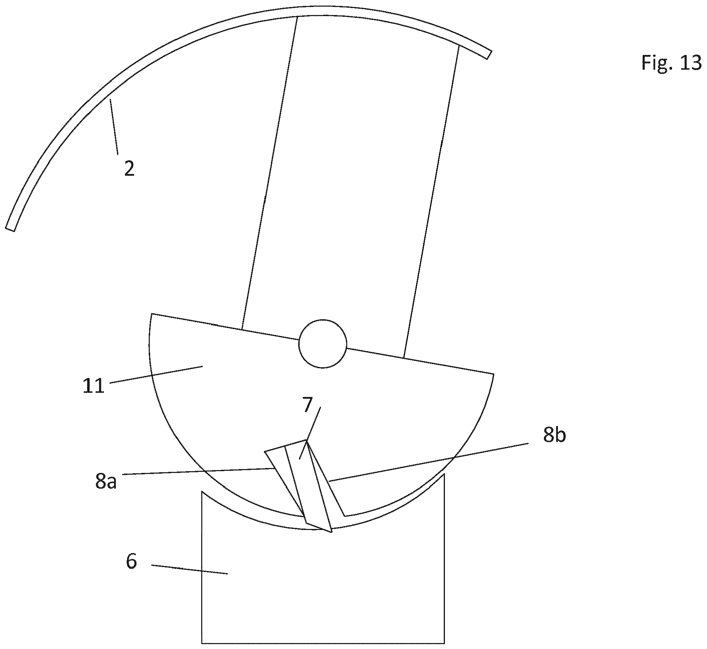

Figur 13 zeigt die Anordnung der Bauteile während des Schließvorgangs der Abdeckklappe (2). Der Bremshebel (7) liegt nun an der rechten Seitenwand (8b) der Kulisse (11) an und der Bremshebel (7) greift stärker in den Bremsklotz (6) ein.

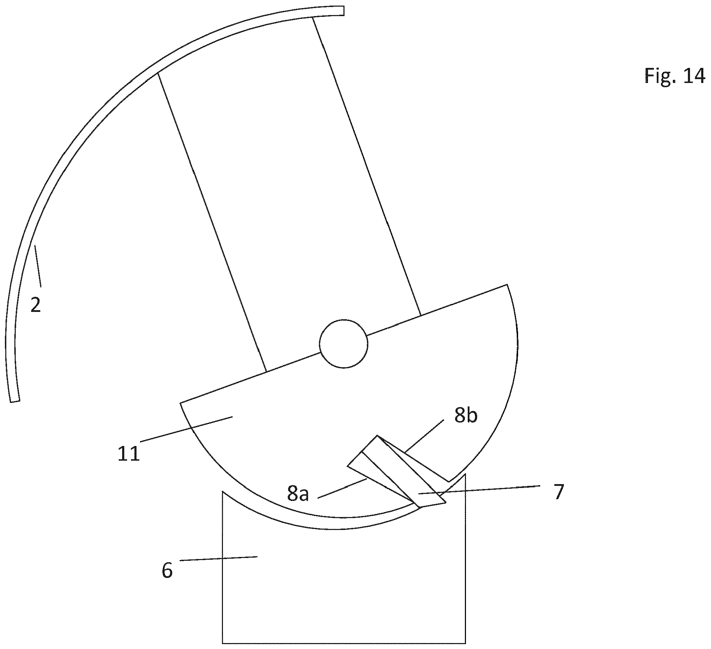

Figur 14 bildet die Anordnung der Bauteile bei vollständig geschlossener Abdeckklappe (2) ab. Der Bremshebel (7) greift dabei stark in den Bremsklotz (6) ein.

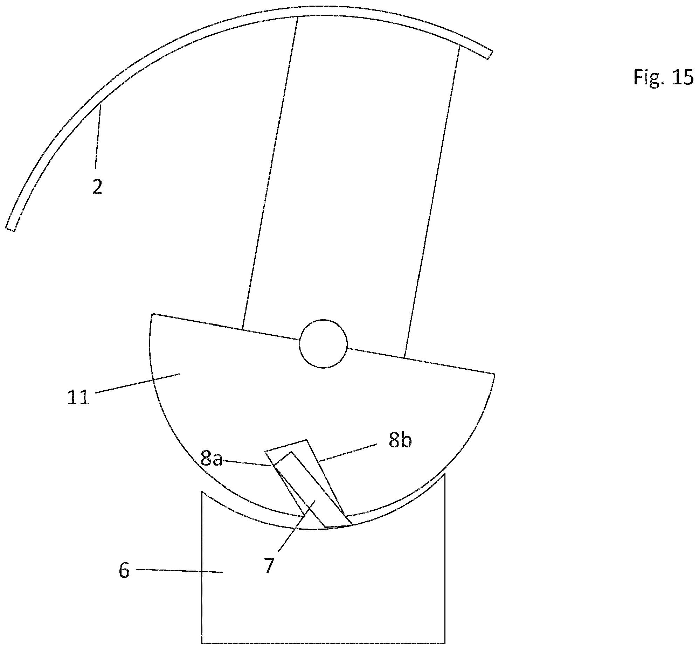

Figur 15 zeigt nun die Anordnung der Bauteile während des Öffnungsvorgangs der Abdeckklappe (2). Der Bremshebel (7) liegt nun wieder an der rechten Wand (8a) der Kulisse (11) an und greift kaum in den Bremsklotz ein.
Die Figuren 16 und 17 erläutern die Schließkraft und die Bremskraft für den Brotkasten und für den Fall, dass der Bremshebel in eine Kulisse eingreift. Wie bereits vorne definiert ist die Schließkraft im Sinne der vorliegenden Erfindung das Produkt aus der Normalkraft (14) der Abdeckklappe und dem in den Figuren 16 und 17 als L1 bezeichneten Abstand zwischen dem Schwerpunkt der Abdeckklappe (15) und dem Drehpunkt (16) der Bremsvorrichtung. Die Bremskraft ist das Produkt aus der Reibkraft (17) und dem in den Figuren als L2 bezeichneten Abstand zwischen dem Angriffspunkt (18) des Bremshebels am Bremsklotz und dem Drehpunkt (16) der Bremsvorrichtung. Weiterhin kann den Figuren 16 und 17 entnommen werden, dass die Anpresskraft (19) am Angriffspunkt (18) des Bremshebels wirkt.

## Patentansprüche

1. Behälter (1) enthaltend folgende Bauteile:
I) einen Korpus (3) mit zwei Seitenwänden (3a, 3b),
II) eine Abdeckklappe (2) mit zwei Seitenwangen (2a, 2b), die über mindestens zwei Verbindungselemente (4) mit den Seitenwänden (3a, 3b) des Korpus (3) verbunden ist;
III) mindestens eine Bremsvorrichtung (5) mit mindestens einem Bremsklotz (6) und mindestens einem beweglich gelagerten Bremshebel (7), die an mindestens einer Seitenwange (2a, 2b) und/oder mindestens einer Seitenwand (3a, 3b) fixiert sind, wobei der mindestens eine Bremshebel (7) nicht am selben Bauteil wie der mindestens eine Bremsklotz (6) angeordnet ist,
**dadurch gekennzeichnet, dass** die Kraft mit welcher der Bremshebel (7) an den Bremsklotz (6) angepresst wird, beim Schließen der Abdeccklappe (2) größer ist als beim Öffnen der Abdeckklappe (2) und wobei diese Anpresskraft so gewählt ist, dass die Bremskraft beim Schließvorgang größer oder gleich der Schließkraft der Abdeckklappe (2) ist.

2. Behälter nach Anspruch 1,
**dadurch gekennzeichnet, dass** der Behälter mindestens zwei Anschläge (8a, 8b) für den Bremshebel (7) aufweist, wobei diese Anschläge (8a, 8b) am selben Bauteil wie der Bremshebel (7) fixiert sind.

3. Behälter nach einem der vorhergehenden Ansprüche,
**dadurch gekennzeichnet, dass** die mindestens zwei Verbindungselemente (4) zweiteilig aufgebaut sind mit jeweils zwei Verbindungsteilen (4a, 4b), wobei sich die Verbindungsteile (4a, 4b) durch Öffnungen in der Seitenwange (2a, 2b) und Öffnungen in der Seitenwand (3a, 3b) hindurch erstrecken und die Verbindungsteile (4a, 4b) kraft- oder formschlüssig, insbesondere durch Steckverbindung, Schraubverbindung, Klebeverbindung, Pressverbindung, Rastverbindung oder Schweißverbindung, miteinander verbunden sind.

4. Behälter nach einem der vorhergehenden Ansprüche,
**dadurch gekennzeichnet, dass** mindestens eine Seitenwange (2a, 2b) mit einem Zapfen (9) verbunden ist und der Bremshebel (7) eine Aufnahme für den Zapfen (9) aufweist, so dass der Bremshebel (7) auf dem Zapfen (9) drehbar gelagert ist.

5. Behälter nach dem vorhergehenden Anspruch,
**dadurch gekennzeichnet, dass** der Zapfen (9) kraft- oder formschlüssig mit mindestens einer Seitenwange (2a, 2b) verbunden ist, insbesondere durch eine Steckverbindung, Schraubverbindung, Klebeverbindung, Pressverbindung, Rastverbindung oder Schweißverbindung.

6. Behälter nach dem vorhergehenden Anspruch,
**dadurch gekennzeichnet, dass** der Behälter ein Bauteil (10), insbesondere eine Scheibe, mit dem Verbindungselement (4a) und dem Zapfen (9) aufweist.

7. Behälter nach einem der Ansprüche 1 oder 2,
**dadurch gekennzeichnet, dass** die Seitenwände einer Kulisse (11) in welche der Bremshebel (7) eingreift die Anschläge (8a, 8b) bilden, wobei der Bremshebel (7) zwischen den Anschlägen (8a, 8b) frei beweglich ist, aber diese die Maximalpositionen des Bremshebels (7) beim Öffnen und Schließen der Abdeckklappe (2) vorgeben.

8. Behälter nach einem der vorhergehenden Ansprüche,
**dadurch gekennzeichnet, dass** mindestens eine Seitenwand (3a, 3b) eine die Bremsvorrichtung (5) umhüllende Wand (12) aufweist, über die der Bremsklotz (6) an der Seitenwand (3a, 3b) fixiert ist.

9. Behälter nach einem der vorhergehenden Ansprüche,
**dadurch gekennzeichnet, dass** der Bremsklotz (6) eine Führungsschiene (6a) für den Bremshebel (7) aufweist, wobei die Tiefe und/oder Breite der Führungsschiene (6a) vom vorderen Ende des Bremsklotzes (6b) zum hinteren Ende des Bremsklotzes (6c) hin zunimmt.

10. Behälter nach Anspruch 9,
**dadurch gekennzeichnet, dass** der Bremshebel (7) ein in den Bremsklotz (6), insbesondere in die Führungsschiene (6a) eingreifendes Element (7a) aufweist, wobei die Geometrie des eingreifenden Elements (7a) und die Geometrie der Führungsschiene (6a) aufeinander abgestimmt sind und wobei besonders bevorzugt das eingreifende Element (7a) buckelförmig oder zahnförmig ausgebildet ist.

11. Behälter nach einem der Ansprüche 9 oder 10,
**dadurch gekennzeichnet, dass** die Breite der Führungsschiene (6a) am vorderen Ende (6b) des Bremsklotzes (6) um bis zu 1 mm, bevorzugt um bis zu 0,3 mm geringer ist als am hinteren Ende (6c); und/oder die Tiefe der Führungsschiene (6a) am vorderen Ende (6b) des Bremsklotzes (6) um bis zu 10 mm, bevorzugt um bis zu 5 mm und besonders bevorzugt um bis zu 2mm geringer ist als am hinteren Ende (6c).

12. Behälter nach einem der vorhergehenden Ansprüche,
**dadurch gekennzeichnet, dass** der Bremsklotz (6) zumindest teilweise, bevorzugt vollständig aus einem dauerelastischen Material besteht, welches bevorzugt ausgewählt ist aus der Gruppe bestehend aus Silikon, Gummi, thermoplastischen Elastomeren und Mischungen daraus.

13. Behälter nach einem der vorhergehenden Ansprüche, **dadurch gekennzeichnet, dass** die Verbindungselemente (4a) und/oder (4b), der Bremshebel (7), die Anschläge (8a), (8b), (13a), der Zapfen (9) und der Vorsprung (13b) unabhängig voneinander aus einem Kunststoff bestehen, wobei es bevorzugt ist, dass die genannten Bauteile aus dem selben Kunststoff bestehen.

14. Behälter nach einem der Ansprüche 1 bis 13, **dadurch gekennzeichnet, dass** die Abdeckklappe aus einem Material ausgewählt aus der Gruppe bestehend aus
• Edelstahl,
• Kunststoff, insbesondere Plexiglas,
• Glas,
• Holz,
• Bambus
• und Mischungen daraus,
besteht.

15. Behälter nach einem der vorhergehenden Ansprüche, **dadurch gekennzeichnet, dass** der Behälter ausgewählt ist aus der Gruppe bestehend aus
• einem Behälter zur Aufbewahrung von Lebensmitteln, insbesondere Brot,
• einer Warmhaltevorrichtung,
• einer Werkzeugkiste,
• einer Spielzeugkiste,
• einem Aquarium,
• einem Schuhregal und
• einer Wäschebox.

## Claims

1. Container (1) comprising the following components:
I) a body (3) with two side walls (3a, 3b),
II) a cover flap (2) with two side faces (2a, 2b) which is connected via at least two connecting elements (4) to the side walls (3a, 3b) of the body (3);
III) at least one braking device (5) with at least one brake shoe (6) and at least one moveably mounted brake lever (7) which are fixed on at least one side face (2a, 2b) and/or on at least one side wall (3a, 3b), the at least one brake lever (7) not being disposed on the same component as the at least one brake shoe (6),
**characterised in that** the force with which the brake lever (7) is pressed against the brake shoe (6) is greater during closing of the cover flap (2) than during opening of the cover flap (2) and this pressing force being chosen such that the braking force during the closing process is greater than or equal to the closing force of the cover flap (2).

2. Container according to claim 1,
**characterised in that** the container has at least two limit stops (8a, 8b) for the brake lever (7), these limit stops (8a, 8b) being fixed on the same component as the brake lever (7).

3. Container according to one of the preceding claims,
**characterised in that** the at least two connecting elements (4) have a two-part construction with respectively two connecting parts (4a, 4b), the connecting parts (4a, 4b) extending through openings in the side face (2a, 2b) and openings in the side wall (3a, 3b) and the connecting parts (4a, 4b) being connected together frictionally or in a form-fit, in particular by a plug-in connection, screw connection, adhesive connection, press connection, locking connection or weld connection.

4. Container according to one of the preceding claims,
**characterised in that** at least one side face (2a, 2b) is connected to a pin (9) and the brake lever (7) has a receiving means for the pin (9) so that the brake lever (7) is mounted rotatably on the pin (9).

5. Container according to the preceding claim,
**characterised in that** the pin (9) is connected to at least one side face (2a, 2b) frictionally or in a form-fit, in particular by a plug-in connection, screw connection, adhesive connection, press connection, locking connection or weld connection.

6. Container according to the preceding claim,
**characterised in that** the container has a component (10), in particular a disc, with the connecting element (4a) and the pin (9).

7. Container according to one of the claims 1 or 2,
**characterised in that** the side walls of a connecting link (11), in which the brake lever (7) engages, form the limit stops (8a, 8b), the brake lever (7) being moveable freely between the limit stops (8a, 8b), however these specify the maximum positions of the brake lever (7) during opening and closing of the cover flap (2).

8. Container according to one of the preceding claims,
**characterised in that** at least one side wall (3a, 3b) has a wall (12) enclosing the braking device (5) via which the brake shoe (6) is fixed to the side wall (3a, 3b).

9. Container according to one of the preceding claims,
**characterised in that** the brake shoe (6) has a guide rail (6a) for the brake lever (7), the depth and/or width of the guide rail (6a) increasing from the front end of the brake shoe (6b) to the rear end of the brake shoe (6c).

10. Container according to claim 9,
**characterised in that** the brake lever (7) has an element (7a) which engages in the brake shoe (6), in particular in the guide rail (6a), the geometry of the engaging element (7a) and the geometry of the guide rail (6a) being coordinated to each other and the engaging element (7a) being configured particularly preferably to be boss-shaped or tooth-shaped.

11. Container according to one of the claims 9 or 10,
**characterised in that** the width of the guide rail (6a) at the front end (6b) of the brake shoe (6) is smaller by up to 1 mm, preferably by up to 0.3 mm than at the rear end (6c); and/or the depth of the guide rail (6a) at the front end (6b) of the brake shoe (6) is smaller by up to 10 mm, preferably by up to 5 mm and particularly preferably by up to 2 mm than at the rear end (6c).

12. Container according to one of the preceding claims,
**characterised in that** the brake shoe (6) consists at least partially, preferably completely, of a permanently elastic material which is selected preferably from the group consisting of silicone, rubber, thermoplastic elastomers and mixtures thereof.

13. Container according to one of the preceding claims,
**characterised in that** the connecting elements (4a) and/or (4b), the brake lever (7), the limit stops (8a, 8b, 13a), the pin (9) and the projection (13b), independently of each other, consist of a plastic material, it being preferred that the mentioned components consist of the same plastic material.

14. Container according to one of the claims 1 to 13,
**characterised in that** the cover flap consists of a material selected from the group consisting of
• stainless steel,
• plastic material, in particular Plexiglass,
• glass,
• wood,
• bamboo,
• and mixtures thereof.

15. Container according to one of the preceding claims, **characterised in that** the container is selected from the group consisting of
• a container for storing foodstuffs, in particular bread,
• a heat retaining device,
• a tool chest,
• a toy chest,
• an aquarium,
• a shoe rack and
• a laundry bin.

## Revendications

1. Récipient (1) contenant les composants suivants :
I) un corps (3) avec deux parois latérales (3a, 3b),
II) un clapet de recouvrement (2) avec deux joues latérales (2a, 2b), qui est relié, par l'intermédiaire de deux éléments de liaison (4) avec les parois latérales (3a, 3b) du corps (3) ;
III) au moins un dispositif de freinage (5) avec au moins un patin de freinage (6) et au moins un levier de freinage (7) monté de manière mobile, qui sont fixés à au moins une joue latérale (2a, 2b) et/ou au moins une paroi latérale (3a, 3b), l'au moins un levier de freinage (7) n'étant pas disposé sur le même composant que l'au moins un patin de freinage (6),
**caractérisé en ce que** la force avec laquelle le levier de freinage (7) est comprimé contre le patin de freinage (6) lors de la fermeture du clapet de recouvrement (2) est plus importante que lors de l'ouverture du clapet de recouvrement (2) et cette force de compression étant choisie de façon à ce que la force de freinage est supérieure ou égale à la force de fermeture du clapet de recouvrement (2) lors du processus de fermeture.

2. Récipient selon la revendication 1,
**caractérisé en ce que** le récipient comprend au moins deux butées (8a, 8b) pour le levier de freinage (7), ces butées (8a, 8b) étant fixées au même composant que le levier de freinage (7).

3. Récipient selon l'une des revendications précédentes,
**caractérisé en ce que** les au moins deux éléments de liaison (4) sont constitués de deux pièces chacune avec deux parties de liaison (4a, 4b), les parties de liaison (4a, 4b) s'étendant à travers des ouvertures dans la joue latérale (2a, 2b) et des ouvertures dans la paroi latérale (3a, 3b) et les parties de liaison (4a, 4b) sont reliées entre elles par force ou par complémentarité de forme, plus particulièrement par emboîtement, liaison vissée, liaison adhésive, liaison par pressage, liaison encliquetée ou liaison soudée.

4. Récipient selon l'une des revendications précédentes,
**caractérisé en ce qu'**au moins une joue latérale (2a, 2b) est reliée à un tenon (9) et le levier de freinage (7) comprend un logement pour le tenon (9), de façon à ce que le levier de freinage (7) soit monté de manière rotative sur le tenon (9).

5. Récipient selon la revendication précédente,
**caractérisé en ce que** le tenon (9) est relié par force ou par complémentarité de forme avec au moins une joue latérale (2a, 2b), plus particulièrement par emboîtement, liaison vissée, liaison adhésive, liaison par pressage, liaison encliquetée ou liaison soudée.

6. Récipient selon la revendication précédente,
**caractérisé en ce que** le récipient comprend un composant (10), plus particulièrement un disque avec l'élément de liaison (4a) et le tenon (9).

7. Récipient selon l'une des revendications 1 ou 2,
**caractérisé en ce que** les parois latérales d'un coulisseau (11) dans laquelle le levier de freinage (7) s'emboîte constituent les butées (8a, 8b), le levier de freinage (7) étant mobile librement entre les butées (8a, 8b) mais celles-ci imposent les positions maximales du levier de freinage (7) lors de l'ouverture et de la fermeture du clapet de recouvrement (2).

8. Récipient selon l'une des revendications précédentes,
**caractérisé en ce qu'**au moins une paroi latérale (3a, 3b) comprend une paroi (12) enveloppant le dispositif de freinage (5), par l'intermédiaire de laquelle le patin de freinage (6) est fixé à la paroi latérale (3a, 3b).

9. Récipient selon l'une des revendications précédentes,
**caractérisé en ce que** le patin de freinage (6) comprend un rail de guidage (6a) pour le levier de freinage (7), la profondeur et/ou la largeur du rail de guidage (6a) augmentant de l'extrémité avant du patin de freinage (6b) en direction de l'extrémité arrière du patin de freinage (6c).

10. Récipient selon la revendication 9,
**caractérisé en ce que** le levier de freinage (7) comprend un élément (7a) s'emboîtant dans le patin de freinage (6), plus particulièrement dans le rail de guidage (6a), la géométrie de l'élément (7a) qui s'emboîte et la géométrie du rail de guidage (6a) étant adaptées entre elles et de préférence l'élément (7a) qui s'emboîte présente une forme de bosse ou de dent.

11. Récipient selon l'une des revendications 9 ou 10,
**caractérisé en ce que** la largeur du rail de guidage (6a) au niveau de l'extrémité avant (6b) du patin de freinage (6) est plus faible de jusqu'à 1 mm, de préférence de jusqu'à 0,3 mm qu'au niveau de l'extrémité arrière (6c) ; et/ou la profondeur du rail de guidage (6a) au niveau de l'extrémité avant (6b) du patin de freinage (6) est plus faible de jusqu'à 10 mm, de préférence de jusqu'à 5 mm et plus particulièrement de préférence de jusqu'à 2 mm qu'au niveau de l'extrémité arrière (6c).

12. Récipient selon l'une des revendications précédentes,
**caractérisé en ce que** le patin de freinage (6) est constitué, au moins partiellement, de préférence entièrement d'un matériau durablement élastique, qui est de préférence sélectionné dans le groupe constitué du silicone, du caoutchouc, d'élastomères thermoplastiques et de mélanges de ceux-ci.

13. Récipient selon l'une des revendications précédentes, **caractérisé en ce que** les éléments de liaison (4a) et/ou (4b), le levier de freinage (7), les butées (8a), (8b), (13a), le tenon (9) et la saillie (13b) sont constitués, indépendamment entre eux, d'une matière plastique, de préférence les composants mentionnés sont constitués de la même matière plastique.

14. Récipient selon l'une des revendications 1 à 13, **caractérisé en ce que** le clapet de recouvrement est constitué d'un matériau sélectionné dans le groupe constitué de
• acier inoxydable
• matière plastique, plus particulièrement plexiglas,
• verre
• bois,
• bambou
• et mélanges de ceux-ci.

15. Récipient selon l'une des revendications précédentes, **caractérisé en ce que** le récipient est sélectionné dans le groupe constitué de
• un récipient pour la conservation de produits alimentaires, plus particulièrement de pain,
• un dispositif de maintien au chaud,
• une caisse à outils,
• un coffre à jouets,
• un aquarium,
• une étagère à chaussures et
• un panier à linge.
